(19)

Europäisches
Patentamt
European
Patent Office
Office européen
des brevets

(11) **EP 4 365 776 A1**

(12) **EUROPEAN PATENT APPLICATION**

(43) Date of publication:
**08.05.2024   Bulletin 2024/19**

(21) Application number: **23207770.1**

(22) Date of filing: **03.11.2023**

(51) International Patent Classification (IPC):
**G06N 3/088** (2023.01)      **G06N 3/0895** (2023.01)
**G06N 3/084** (2023.01)

(52) Cooperative Patent Classification (CPC):
**G06N 3/088; G06N 3/0895;** G06N 3/045;
G06N 3/084; G06N 3/096; G06N 7/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **04.11.2022   KR 20220145743**

(71) Applicant: **Samsung Electronics Co., Ltd.**
**Suwon-si, Gyeonggi-do 16677 (KR)**

(72) Inventors:
• **KIM, Heewon**
  **Suwon-si 16678 (KR)**
• **CHANG, Hyun Sung**
  **Suwon-si 16678 (KR)**
• **LEE, Jaeyun**
  **Suwon-si 16678 (KR)**
• **CHO, Kiho**
  **Suwon-si 16678 (KR)**

(74) Representative: **Arnold & Siedsma**
**Bezuidenhoutseweg 57**
**2594 AC The Hague (NL)**

(54)    **METHOD AND DEVICE WITH AUTOMATIC LABELING**

(57)    A processor-implemented method includes training a first model to predict confidences of labels for data samples in a training dataset, including using a corrected data sample obtained by correcting an incorrect label based on a corresponding confidence detected by the first model and an estimated corrected label generated by a second model; training the second model to estimate correct labels for the data samples, including estimating a correct other label corresponding to another incorrect label detected based on a corresponding confidence generated by the first model with respect to the other incorrect label; and automatically correcting the other incorrect label with the estimated correct other label.

FIG. 1

**Description**

FIELD

The present disclosure relates to a training method and a method and device with automatic labeling.

BACKGROUND

A deep learning model may be trained using a great amount of labeled data. For example, when training data includes data labeled with incorrect labels, the trained deep learning model may misrecognize the incorrect labels as correct ones, thereby degrading performance in accuracy.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
According to an aspect of the present disclosure, a processor-implemented method is provided, which may include training a first model to predict confidences of labels for data samples in a training dataset, including using a corrected data sample obtained by correcting an incorrect label based on a corresponding confidence detected by the first model and an estimated corrected label generated by a second model; training the second model to estimate correct labels for the data samples, including estimating a correct other label corresponding to another incorrect label detected based on a corresponding confidence generated by the first model with respect to the other incorrect label; and automatically correcting the other incorrect label with the estimated correct other label.
The respective trainings of the first and second models may be iterative trainings that, based on the confidences of the labels in the training dataset, iteratively trains the first model to detect incorrect labels and the second model to estimate the correct labels; the iterative training further comprises: determining the confidence comprising a first probability of each of the labels being correct and a second probability of each of the labels being incorrect; training the first model by updating first parameters of the first model, to predict confidence, using the corrected data samples obtained by correcting the incorrect labels in the first data sample.
The classifying may include sampling the second data sample comprising the correct labels based on a Bernoulli distribution.
The updating of the first parameters may include updating the first parameters of the first model based on a maximum likelihood corresponding to the corrected data samples.
The training of the first model may include training the first model by applying respective regularization penalties for the confidences to the updated first parameters.
The training of the first model may further include determining initial parameter values of the first model based on a calculated cross-entropy loss.
The training of the second model may include estimating a probability of the correct other label corresponding to the other incorrect label of the first data sample; training the second model by updating second parameters of the second model, to estimate the other correct label, using a first data sample comprising the estimated probability of the other correct label.
The method may further include classifying the data samples in the training dataset into a first data sample comprising the incorrect labels and a second data sample comprising the correct labels based on a distribution of the confidences; wherein the data samples are mixed such that the first data sample comprises training data and the incorrect label corresponding to the training data and the second data sample comprises the training data and the correct label corresponding to the training data.
The training data may include image data of a semiconductor obtained by an image sensor.
The first model and the second model may be each trained based on an expectation-maximization (EM) algorithm.
According to another aspect of the present disclosure, an automatic labeling method is provided, which may include detecting whether a label for a data sample is an incorrect label by applying the data sample to a first model, wherein the first model comprises a first neural network that is trained to detect the incorrect label comprised in the data sample based on confidence of the label.
The data sample may include input data and the label corresponding to the input data, and the method may further include generating a correct label corresponding to the incorrect label by applying the input data to a second model, as the label is determined as the incorrect label, wherein the second model comprises a second neural network that is trained to estimate the correct label corresponding to the data sample comprising the incorrect label.

The input data may include image data of a semiconductor obtained by an image sensor.

According to another aspect of the present disclosure, a non-transitory computer-readable storage medium is provided, storing instructions that, when executed by a processor, may cause the processor to perform the training method or the automatic labeling method described above.

According to another aspect of the present disclosure, an electronic device is provided which may include a communication system; and a processor configured to, based on confidences of labels for data samples in a training dataset received by the communication system, iteratively train a first model to detect incorrect labels in the training dataset and a second model to estimate correct labels corresponding to the incorrect labels, and generate a data sample in which an incorrect label is corrected using at least one of the first model or the second model, wherein the processor is further configured to train the first model to predict the confidences, including using the corrected data sample generated by correcting the incorrect label based on a corresponding confidence detected by the first model and an estimated corrected label generated by the second model, train the second model to estimate correct labels for the data samples, including estimating a corrected other label corresponding to another incorrect label detected based on a corresponding confidence generated by the first model with respect to the other incorrect label, and automatically correct the other incorrect label with the estimated correct other label.

The processor may be configured to determine the confidence comprising a first probability of each of the labels being correct and a second probability of each of the labels being incorrect; classify the data samples in the training dataset into a first data sample comprising the incorrect labels and a second data sample comprising the correct labels, based on a distribution of the confidences; training the first model by update first parameters of the first model, to predict the confidences, using the corrected data samples obtained by correcting the incorrect labels in the first data sample.

The processor may be configured to update the first parameters of the first model based on a maximum likelihood corresponding to the corrected data samples.

The processor may be configured to train the first model by applying further respective regularization penalties for the confidences to the updated first parameters.

The processor may be configured to determine further initial parameter values of the first model based on a calculated cross-entropy loss.

The processor may be configured to estimate a probability of the correct other label corresponding to the other incorrect label of the first data sample, train the second model by updating second parameters of the second model, to estimate the other correct label, using the first data sample comprising the estimated probability of the other correct label.

Other features and aspects will be apparent from the following detailed description, the drawings, and the claims.

BRIEF DESCRIPTION OF THE DRAWINGS

FIG. 1 illustrates an example device configured to train models for automatic labeling according to one or more embodiments.

FIG. 2 illustrates an example method for automatic labeling according to one or more embodiments.

FIG. 3 illustrates an example method of training a first model according to one or more embodiments.

FIG. 4 illustrates an example method of training a second model according to one or more embodiments.

FIG. 5 illustrates an example method of iteratively training a first model and a second model according to one or more embodiments.

FIG. 6 illustrates an example operation of a training device for automatic labeling according to one or more embodiments.

FIG. 7 illustrates an example method for automatic labeling according to one or more embodiments.

FIG. 8 illustrates an example operation of a semiconductor error detecting device using a trained detection model and a trained auto-labeling model according to one or more embodiments.

FIG. 9 illustrates an example operation of an incorrect label detecting device using a trained detection model according to one or more embodiments.

FIG. 10 illustrates an example operation of an automatic labeling device using a trained auto-labeling model according to one or more embodiments.

FIG. 11 illustrates an example training device for automatic labeling according to one or more embodiments.

FIG. 12 illustrates an example electronic device configured to perform automatic labeling according to one or more embodiments.

Throughout the drawings and the detailed description, unless otherwise described or provided, the same drawing reference numerals may be understood to refer to the same or the like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment, e.g., as to what an example or embodiment may include or implement, means that at least one example or embodiment exists where such a feature is included or implemented, while all examples are not limited thereto.

Throughout the specification, when a component or element is described as being "on", "connected to," "coupled to," or "joined to" another component, element, or layer it may be directly (e.g., in contact with the other component or element) "on", "connected to," "coupled to," or "joined to" the other component, element, or layer or there may reasonably be one or more other components, elements, layers intervening therebetween. When a component or element is described as being "directly on", "directly connected to," "directly coupled to," or "directly joined" to another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Due to manufacturing techniques and/or tolerances, variations of the shapes shown in the drawings may occur. Thus, the examples described herein are not limited to the specific shapes shown in the drawings, but include changes in shape that occur during manufacturing.

Unless otherwise defined, all terms, including technical and scientific terms, used herein have the same meaning as commonly understood by one of ordinary skill in the art to which this disclosure pertains specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

As used herein, the term "and/or" includes any one and any combination of any two or more of the associated listed items. The phrases "at least one of A, B, and C", "at least one of A, B, or C', and the like are intended to have disjunctive meanings, and these phrases "at least one of A, B, and C", "at least one of A, B, or C', and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

A same name may be used to describe respective elements disclosed in various embodiments. Such respective elements may be the same element or configured/operate the same, or different elements having a same or like function, noting that alternative embodiments are also available. Unless otherwise mentioned, the descriptions of any of the embodiments may be applicable to any other embodiment, unless the corresponding description and embodiment necessitates otherwise, and thus, duplicated descriptions may be omitted for conciseness.

In order to verify in advance whether a dataset includes an incorrect label, the incorrect label may be estimated with loss function values with respect to training data samples, the influence of a data label that is estimated as an incorrect label may be weighted to reduce the influence of the incorrect label in a training process of the machine learning models such as in a deep learning process of a deep neural network, or noise removal may be implemented during the training of the machine learning model through semi-supervised learning.

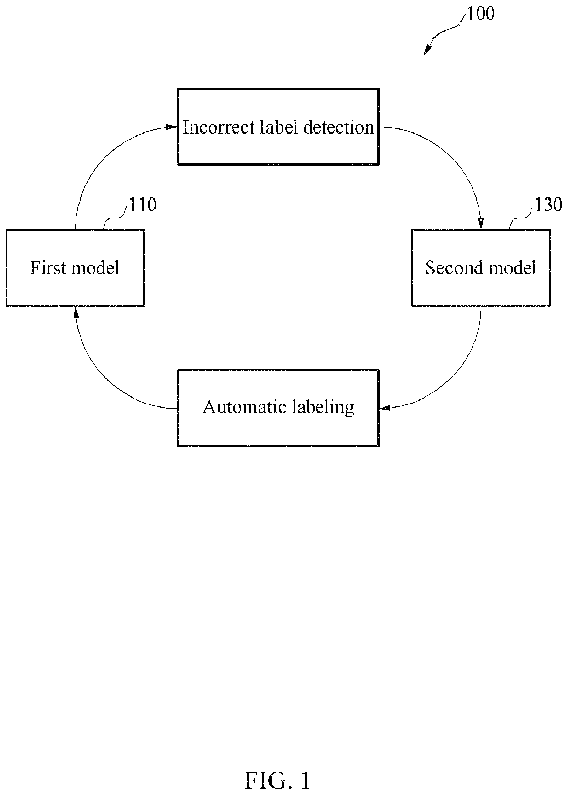

FIG. 1 illustrates an example device configured to train models for automatic labeling according to one or more embodiments. Referring to FIG. 1, a training device 100 may be configured to train a neural network robustly against an incorrect label when there is an incorrect label among labels included in a dataset that is used to train the neural network. Herein, while examples are described with respect to neural networks, examples are not limited thereto.

In one example, the training device 100 may train a neural network model to be robust against incorrect labels when an incorrect label (i.e., a wrong label) is included in a training dataset for training the neural network. The training device 100 may include a first model 110 that is configured to determine an incorrect label and a second model 130 that is configured to perform automatic relabeling.

The first model 110 may detect an incorrect label included in the training dataset. The first model 110 may correspond to a deep learning model including a first neural network.

The first model 110 may classify the data samples included in the dataset into a data sample in which a label corresponding to data is correct and a data sample in which a label corresponding to the data is noise or an incorrect label. Alternatively, the first model 110 may divide the training dataset into two sets by distinguishing a data sample labeled with an incorrect label and a data sample labeled with a correct label among labels included in the dataset.

The second model 130 may relabel the entire dataset. Alternatively, the second model 130 may relabel a data sample including an incorrect label detected by the first model 110. The second model 130 may correspond to a deep learning model including a second neural network. The second model 130 may correct the data sample with the incorrect label and output a relabeled data sample in which the incorrect label is corrected. In addition, when data without a label is input, the second model 130 may be configured to automatically label the data.

When a label corresponding to data is correct, the label is referred to herein as a "correct label." When a label corresponding to data is noise or incorrectly labeled, the label is referred to herein as an "incorrect label" or a "noise label." Also, a data sample including an incorrect label, i.e., a data sample labeled with an incorrect label, is referred to herein as a "first data sample," and the first data sample may also be referred to herein as a "corrupted data sample" in that it is corrupted by noise or errors. The terms "first data sample" and "corrupted data sample" may be used herein interchangeably.

A data sample including a correct label, i.e., a data sample labeled with a correct label, is referred to herein as a "second data sample," and the second data sample may also be referred to herein as a "clean data sample" in that there is no noise or error. The terms "second data sample" and "clean data sample" may be used herein interchangeably. The training dataset may be mixed with one or more first data samples and one or more second data samples.

The training device 100 may be configured to iteratively train the first model 110 and the second model 130. In one example, the training device 100 may iteratively train the first model 110 and the second model 130 through iterative learning. The iterative learning may train the second model 130 by applying a result obtained from the first model 110 to the second model 130 and may train the first model 110 by applying a result obtained from the second model 130 that has been trained.

The first model 110 may predict a ratio of first data samples including incorrect labels to the entire data samples included in the dataset. The first model 110 may classify the data samples into the first data samples and the second data samples based on the predicted ratio of first data samples. The first model 110 may calculate a first probability (e.g., $q_n$) of each of the data samples being correct, using a result predicted by the second model 130. The first model 110 may sample each second data sample including a correct label according to the Bernoulli distribution relating to the first probability.

A parameter of the second model 130 may be updated by a second data sample including a correct label. The second model 130 that has been updated may correct an incorrect label. The second model 130 may update a parameter of the first model 110 using a data sample including a corrected label. The parameter of the first model 110 is referred to herein as a "first parameter, and the parameter of the second model 130 is referred to herein as a "second parameter."

Thus, the first model 110 and the second model 130 may be iteratively trained in an iterative manner as described above.

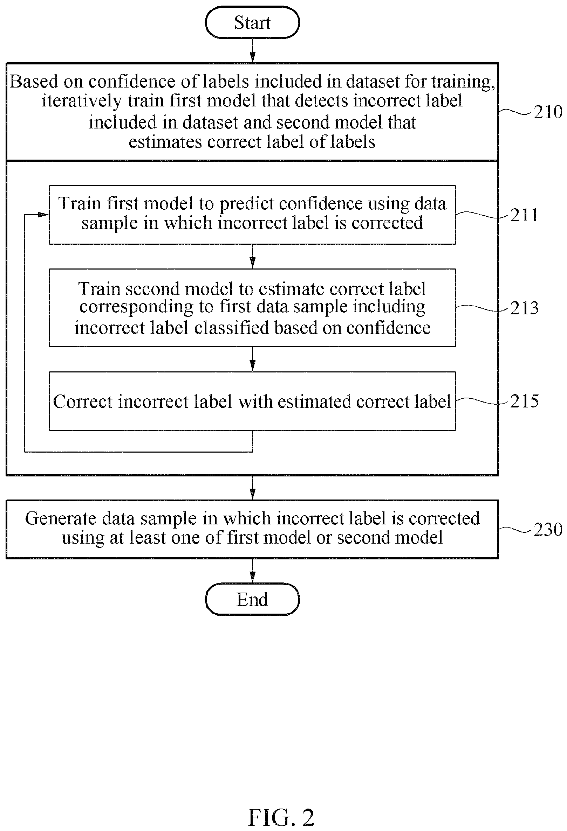

FIG. 2 illustrates an example iterative training method for automatic labeling according to one or more embodiments. Operations to be described hereinafter with reference to FIG. 2 may be performed in sequential order, but need not be necessarily performed in sequential order. For example, the order of the operations may be changed and at least two of the operations may be performed in parallel, or any additional operation may be added in purpose to optimize the training method.

Referring to FIG. 2, example operations 210 through 230 may be performed to correct an incorrect label of a data sample generated by an iterative training device (e.g., the training device 100).

In operation 210, based on confidence of labels included in a training dataset, the training device may iteratively train a first model that detects an incorrect label among the labels included in the training dataset and a second model that estimates a correct label of the labels. The training dataset may mix the first data samples including training data and incorrect labels corresponding to the training data and the second data sample including the training data and correct labels corresponding to the training data are mixed. A "(correct or incorrect) label corresponding to training data" used herein may be construed as referring to a (correct or incorrect) label that is labeled in the training data. The training dataset may be input data, for example, image data obtained by an image sensor, which may be configured to capture an image of a semiconductor, a road or a three-dimensional (3D) space, but examples of the image data are not necessarily limited thereto. For example, the image sensor may be included in the training device or exterior of the training device. The image data may be obtained by the communication system of the training device from the exterior image sensor.

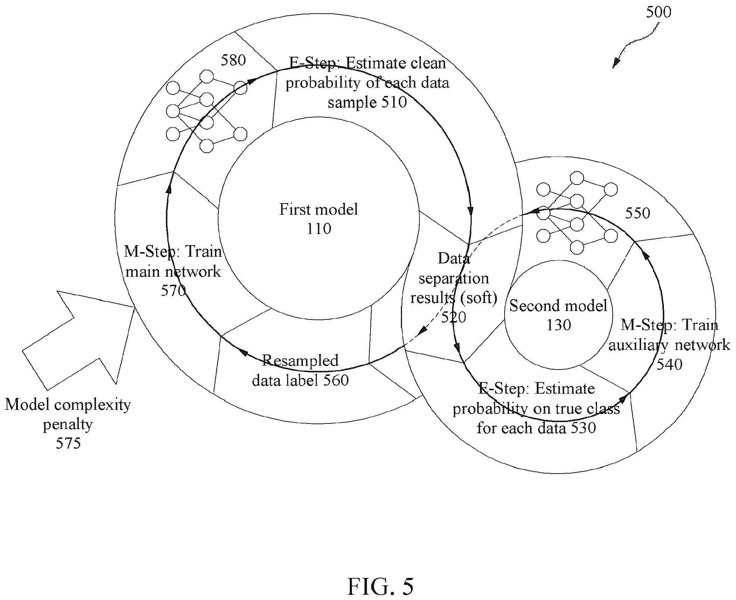

The first model and the second model may each be trained based on, for example, an expectation-maximization (EM) algorithm to be described below with reference to FIG. 5.

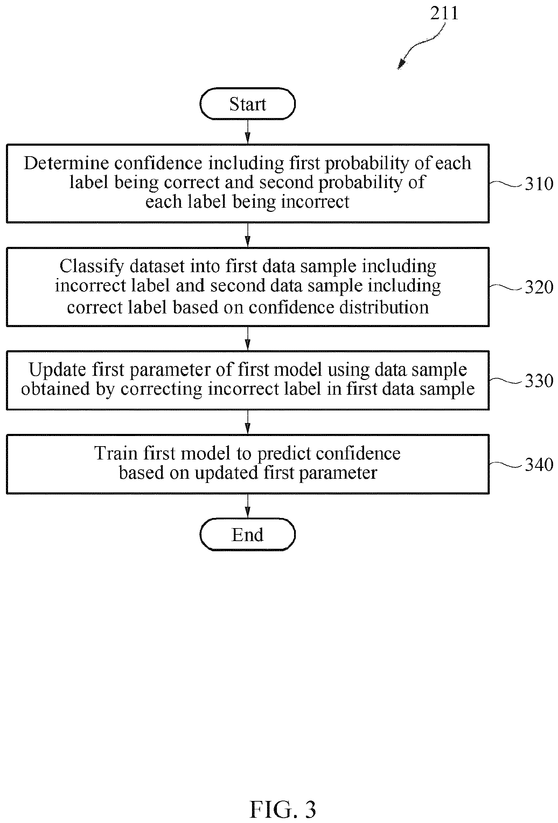

In operation 211, the iterative training device may train the first model to predict the confidence of the labels, using the data sample in which the incorrect label is corrected. A method of training the first model by the iterative training device will be described below with reference to FIG. 3.

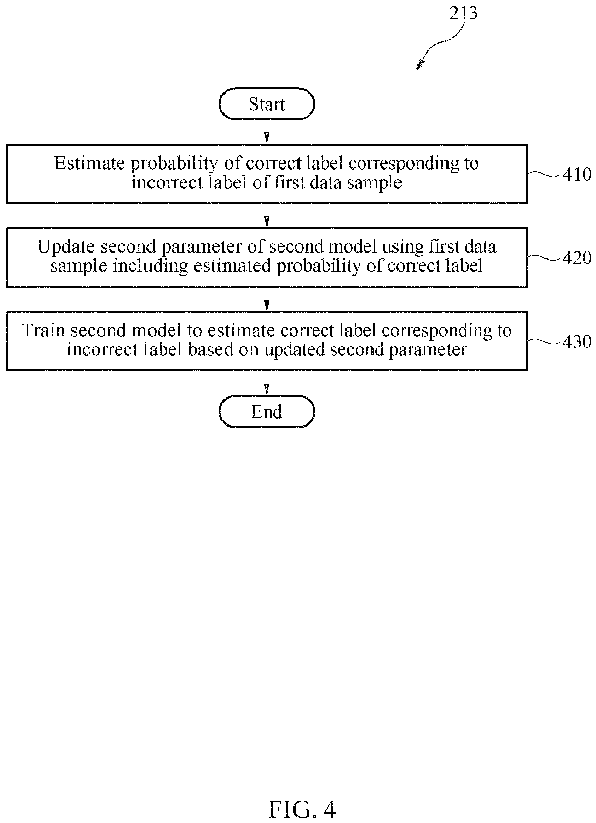

In operation 213, the iterative training device may train the second model to estimate a correct label corresponding to the first data sample including the incorrect label classified based on the confidence predicted by the first model. A method of training the second model by the training device will be described below with reference to FIG. 4.

In operation 215, the iterative training device may correct/relabel the incorrect label with a corrected label (a new correct label) estimated by the second model.

In operation 230, the iterative training device may generate the data sample in which the incorrect label is corrected, using at least one of the first model or the second model that is iteratively trained in operation 210.

FIG. 3 illustrates an example method of training a first model according to one or more embodiments. Operations to be described hereinafter with reference to FIG. 3 may be performed in sequential order, but need not be necessarily performed in sequential order. For example, the order of the operations may be changed and at least two of the operations may be performed in parallel, or any additional operation may be added in purpose to optimize the training method.

Referring to FIG. 3, a training device (e.g., the training device 100) may train the first model through operation 211, which may further include operations 310 through 340.

In operation 310, the training device may determine a confidence including a first probability of each of the labels being correct and a second probability of each of the labels being incorrect.

In operation 320, the training device may classify the dataset into a first data sample including an incorrect label and a second data sample including a correct label, based on a distribution of the confidence determined in operation 310. The training device may sample the second data sample including the correct label based on the Bernoulli distribution, for example.

In operation 330, the training device may update a first parameter of the first model, using a data sample obtained by correcting the incorrect label in the first data sample classified in operation 320. For example, the training device may update the first parameter of the first model based on a maximum likelihood corresponding to the data sample obtained by correcting the incorrect label in the first data sample.

In operation 340, the training device may train the first model to predict the confidence based on the first parameter updated in operation 330. The training device may determine an initial parameter value of the first model based on cross-entropy, for example. The training device may train the first model by applying further a regularization penalty for the confidence to the first parameter updated in operation 330. The regularization penalty will be described below with reference to FIG. 5.

FIG. 4 illustrates an example method of training a second model according to one or more embodiments. Operations to be described hereinafter with reference to FIG. 4 may be performed in sequential order, but need not be necessarily performed in sequential order. For example, the order of the operations may be changed and at least two of the operations may be performed in parallel, or any additional operation may be added in purpose to optimize the training method.

Referring to FIG. 4, the training device may train the second model through operation 213, which may further include operations 410 through 430.

In operation 410, the training device may estimate a probability of a correct label corresponding to an incorrect label of a first data sample.

In operation 420, the training device may update a second parameter of the second model using the first data sample including the probability of the correct label estimated in operation 410.

In operation 430, the training device may train the second model to estimate the correct label corresponding to the incorrect label based on the second parameter updated in operation 420.

FIG. 5 illustrates an example method of iteratively training a first model and a second model according to one or more embodiments. Referring to FIG. 5, an example method 500 may train a first model 110 and a second model 130 based on an EM algorithm according to one or more embodiments. In an example, either or both of the first model 110 and the second model 130 are neural networks (e.g., separate neural networks or different positions of a same neural network).

The first model 110 may perform mixture modeling and noise data fitting. The mixture modeling may refer to a process of generating a dataset by mixing a first data sample including an incorrect label and a second data sample including a correct label.

The second model 130 may perform label refurbishment, i.e., label correction. In one example, the training device may optimize two neural networks of the first model 110 and the second model 130 using the EM algorithm. The first model 110 and the second model 130 may each execute a unique EM algorithm to solve each task.

The EM algorithm, which is mainly used for unsupervised learning, may be divided into two steps: an expectation step (or E-step) and a maximization step (M-step). The EM algorithm may find an optimal parameter value by iteratively performing the E-step and the M-step.

In the E-step, a most approximate likelihood value may be calculated from a given initial parameter value.

In the M-step, a new parameter value that maximizes the likelihood value calculated in the E-step may be obtained.

The EM algorithm may be construed as a process of finding an approximate value of an optimal parameter while continuously repeating the M-step and the E-step. The EM algorithm may obtain the optimal parameter by defining a probability variable for a function (e.g., a probability distribution) of parameters to be obtained and performing optimization on the probability variable.

The first model 110 may also be referred to as a "main network" or a "distinguisher", which performs a main operation of detecting an incorrect label. The second model 130 may also be referred to as an "auxiliary network" or a "refurbisher", which performs an auxiliary operation of estimating a correct label of data and correcting the incorrect label.

For example, a training dataset corresponding to a mixture of a first data sample labeled with an incorrect label and a second data sample labeled with a correct label is assumed as $D = x \times \bar{y} = \{(x_1, \bar{y}_1), ..., (x_n, \bar{y}_n)\}$. In this example, $x_k$ denotes kth image data, and $y_k \in \{1, ..., K\}$ denotes labels corresponding to K pieces of image data, in which K may denote the number of classes.

The first model 110 may distinguish between a second data sample Dl that is a clean data sample and a first data sample Du that is a corrupted data sample, in the training dataset. Here, labeling may be construed as a process of finding a label y that, when image data x is given, allows (x, y) to be laid on a manifold.

In one embodiment, a focus may be on labeling an incorrect label, and thus the training dataset, as a mixture model, may be defined in a conditional form as expressed by Equation 1 below.

Equation 1:

$$p(\tilde{y}|x) \approx \pi p_{manifold}(\tilde{y}|x) + (1 - \pi)\epsilon(\tilde{y}|x)$$

In Equation 1, x denotes image data, and $\tilde{y}$ denotes an incorrect label labeled in the image data. $P_{manifold}(\tilde{y}|x)$ may correspond to a classifier model to be implemented through a neural network. $p(\tilde{y}|x)$ may denote a probability that an incorrect label is labeled in the image data included in the training dataset. $\epsilon$ may denote a distribution of corrupted data samples, and $\pi$ may denote a ratio of clean data samples (i.e., second data samples) included in the entire training dataset.

Here,

$$p(x, \tilde{y}) = p(x) \, p(\tilde{y}|x)$$

In one embodiment, a data distribution $p_{data}(x)$ may be used as needed, rather than parametrizing a probability $p(x)$.

The first model 110 may model $p_{manifold}(|x)$ by a classification network g. In one example, in response to the image data x corresponding to an input to the classification network g, a softmax output of the classification network g may be represented as $g_x = (g_x[1], ..., gx[K])$.

In Equation 1, by taking $\varepsilon(\tilde{y}|x)$ as a constant such as $\varepsilon(\tilde{y}|x) = \varepsilon$, the first model 110 for processing an incorrect label may be assumed. A model in which the assumption that $\varepsilon$ is a constant is relaxed will be described below.

The probability $p(x, \tilde{y})$ that an incorrect label is labeled in the image data included in the training dataset may be expressed by Equation 2 below.

Equation 2:

$$p(x, \tilde{y}) = p_{data}(x)(\pi g_x[\tilde{y}] + (1 - \pi)\epsilon)$$

Equation 2 may be solved by substituting a result of solving Equation 3 below for Equation 2.

Equation 3:

$$\text{maximize}_{\theta_g, \pi} \ \mathbb{E}_{p_{data}(x, \tilde{y})} \left[ \log p(x, \tilde{y}) \right]$$

In Equation 3, $\theta_g$ may denote a parameter of a first neural network g included in the first model 110. However, Equation 3 alone may not be able to separate a first data sample and a second data sample.

For example, when the neural network of the first model 110 has a sufficient capacity to implement a function, for example, when there is $\theta_g$ that makes $g_x[\tilde{y}] = p_{data}(\tilde{y}, x)$ with respect to all $(x, \tilde{y})$ of the dataset, a log likelihood of Equation 3 may be maximized by $\pi = 1$, $gx = p_{data}(\cdot|x)$.

The neural network may tend to be fit into a clean data sample before a corrupted data sample. This is because following a gradient of a relatively large number of clean data samples in a training dataset is effective to reduce a loss even when the network is not well-matched. Even a complex neural network model may behave like a simple model in an early training stage. For this reason, a warm-up period is generally required during the training of the neural network. During the warm-up period, the first model 110 may separate data samples included in the training dataset into two groups (i.e., a clean data sample group and a corrupted data sample group), and then may maintain or increase a difference in a fitting score between the two groups. However, as the gradient continues, a penalty term, or $\eta(g)$, that penalizes model complexity may be generally required. An objective function modified by the penalty term $\eta(g)$ may be expressed by Equation 4 below. The penalty term will be described below in relation to operation 575 in FIG. 5.

Equation 4:

$$\text{maximize}_{\theta_g, \pi} \ \mathbb{E}_{(p_{data}(x, \tilde{y})} \left[ \log p(x, \tilde{y}) \right] - \eta(g)$$

The training device may estimate confidence of labels included in a dataset by iteratively performing the E-step 510 by the first model 110. That is, in the E-step 510, the training device may estimate a hidden variable s; representing a probability that a label of a corresponding data sample is an incorrect label $(xi, \tilde{y}i)$. In one example, when this label is from a clean data sample including a correct label, the first model 110 may represent the hidden variable s; as 1 (s; = 1). On the other hand, when this label is from a corrupted data sample including an incorrect label, the first model 110 may represent the hidden variable s; as 0 (s; = 0).

The foregoing process may be expressed by Equation 5 below for all periods t according to the Bayes' theorem.

Equation 5:

$$q^t(s_i = 1) := p^{t-1}(s_i = 1 | x_i, \tilde{y}_i) = \frac{\pi^{t-1} g_{x_i}^{t-1}[\tilde{y}_i]}{\pi^{t-1} g_{x_i}^{t-1}[\tilde{y}_i] + (1 - \pi^{t-1})\epsilon}$$

Equation 5 may represent a probability of each data sample being a clean data sample.

The first model 110 may perform operation 520 of smoothly classifying the dataset into a first data sample including an incorrect label and a second data sample including a correct label based on a result of the estimation of the hidden variable $s_i$. The smooth classification described herein may be construed as performing the classification based on a probability distribution of each clean data sample and each corrupted data sample.

First data samples smoothly classified in operation 520 by the first model 110 may be propagated forward to the second model 130.

The second model 130 receiving the first data samples smoothly classified in operation 520 by the first model 110 may estimate a probability of a true class corresponding to each of the first data samples through the E-step 530, which is a probability of a correct label corresponding to an incorrect label of the first data samples.

The training device may update a second parameter of the second model 130 using the first data sample including the probability of the correct label estimated in the E-step 530, and in operation 540 may train the second model 130 to estimate the correct label corresponding to the incorrect label based on the updated second parameter.

In operation 560, the training device may correct the incorrect label in the first data sample by back-propagating, to the first model 110, the correct label corresponding to the incorrect label estimated by the second model 550 for which training has been completed. A process of correcting an incorrect label with a correct label in such a way may be referred to as "resampling."

The training device may perform the M-step 570 of training the first model 110 using a data sample obtained by correcting the incorrect label in the first data sample. In the M-step 570, the training device may update a first parameter of the first model 110 using the data sample in which the incorrect label is corrected and train the first model 110 based on the updated first parameter.

In one example, to prevent overfitting due to mixture distribution modeling performed by the first model 110, the training device may train the first model 110 by further applying a regularization penalty for confidence to the updated first parameter. The regularization penalty for confidence may also be referred to as a "model complexity penalty."

The training device may estimate confidence of labels included in each dataset by repeating the E-step 510 by a first model 580 that has been trained.

For example, the EM process of the first model 110 will be described as follows.

The first model 110 may select a suitable distribution $\pi g_x[\tilde{y}]$ or $(1 - \pi)\epsilon$ in a mixture model based on whether s is 1 or 0 (s = 1 or s = 0) for each data sample, and calculate a log-likelihood based on the selected distribution. Since data sample separation may be available in a probabilistic sense, a final evaluation may have the form of an expectation probability. Therefore, the M-step 570 may correspond to a process of solving Equation 6 below.

Equation 6:

$$maximize_{\theta_g, \pi} \frac{1}{N} \sum_{i=1}^{N} \{q^t(s_i = 1) \log(\pi g_{x_i}[\tilde{y}_i]) + q^t(s_i = 0) \log((1 - \pi)\epsilon\} - \eta(g)$$

Practically, $\pi$ and $\theta_g$ may be disjoint in Equation 6, and thus the maximization may be performed on each of $\pi$ and $\theta_g$.

The ratio $\pi$ of clean data samples included in the entire training dataset may be obtained in an approximate form by Equation 7 below.

Equation 7:

$$\pi^t = \frac{1}{N} \sum_{i=1}^{N} q^t(s_i = 1)$$

In addition, the parameter $\theta_g$ of the first neural network g included in the first model 110 may be obtained through training by a loss function $L^t_{main,g}$ expressed by Equation 8 below.

Equation 8:

$$L^t_{main,g} \quad = -\frac{1}{N}\sum_{i=1}^{N} q^t(s_i = 1) \log g_{x_i}[\tilde{y}_i] + \eta(g)$$

The first term of Equation 8, $-\frac{1}{N}\sum_{i=1}^{N} q^t(s_i = 1) \log g_{x_i}[\tilde{y}_i]$ , may correspond to cross-entropy evaluated by reweighted samples in operation 560.

The ultimate objective function of Equation 4 described above may be guaranteed not to decrease during iterations of the EM algorithm. Thus, the EM algorithm may find at least a local optimum while avoiding the risk of collapses or self-confirming biases in principle. However, training a neural network using a reweighted data sample may not be a desirable strategy. In particular, when an assigned ratio of incorrect labels is high, training a neural network using a reweighted data sample may not be the desirable strategy.

To clarify this, for example, a probability $\{q(s_i = 1)\}_{i=1}^{n}$ that a data sample included in a training dataset is a clean data sample may be temporarily assumed to be 1 or 0 according to a binary system.

It may be assumed there is no label as a dataset is classified into a clean data sample and a corrupted data sample in operation 520 and then an incorrect label included in the corrupted data sample is discarded. In this case, Equation 8 may rely on the clean data sample to train the first model 110, without using the corrupted data sample.

While excluding a corrupted data sample from a training dataset may be reasonable, the size of an effective training dataset may decrease, or the distribution may shift. To prevent this, the training device may generate an appropriate label for a corrupted data sample based on a class/data structure trained with a clean data sample through semi-supervised learning of the second model 130, and may use the corrupted data sample.

Practically, a probability of a clean data sample is not represented as a binary form of 0 and 1, and thus data samples may not be clearly classified into any one of a clean data sample or a corrupted data sample.

Nevertheless, instead of reducing a tie weight of each data sample to q (s; = 0) as expressed in Equation 8, the second model 130 may appropriately generate a label even when s; = 0, and allow the first model 110 to use this along with an entire weight. The process described above may also be referred to as a "resampling" operation 560, which corresponds to a process of generating a newly labeled data sample.

By representing the data sample resampled in operation 560, i.e., a data sample in which a label is corrected, as $(x_i, \hat{y}_i^t)$, the loss function $L^t_{main,g}$ of the first neural network g included in the first model 110 in Equation 8 may be modified as expressed by Equation 9 below.

Equation 9:

$$L^t_{main,g} = -\frac{1}{N}\sum_{i=1}^{N} \log g_{x_i}[\hat{y}_i^t] + \eta_0(g)$$

In operation 575, the first model 110 may appropriately adjust a model penalizing term from $\eta(g)$ to $\eta_0(g)$ (i.e., $\eta(g) \rightarrow \eta_0(g)$) based on the dataset resampled in operation 560.

The resampled data sample may still have noise, and the distribution may be represented as $\hat{p}^t_{date}(x, \tilde{y})$ from which a time index t may be omitted when there is no confusion. In this case, the confidence regularizer may be considered to perform a function of a penalizer, such as, $\eta_o(g) = \lambda \mathbb{E}_{\hat{p}^t_{data(x)}} \mathbb{E}_{\hat{p}^t_{data(\tilde{y})}}[\log g_x [\tilde{y}]]$.

A loss function L for training the first neural network of the first model 110 may be regularized as expressed by Equation 10 below.

Equation 10:

$$L = -\mathbb{E}_{\hat{p}_{data(x,\tilde{y})}}[\log g_x [\tilde{y}]] + \lambda \mathbb{E}_{\hat{p}_{data(x)}} \mathbb{E}_{\hat{p}_{data(\tilde{y})}}[\log g_x [\tilde{y}]]$$

Here, under the assumption that a network capacity is large enough to implement any function,

$$g_x[\tilde{y}] \rightarrow g_x^*[\tilde{y}] = -\frac{1}{Z_x}(\hat{p}_{data}(\tilde{y}|x) - \lambda \hat{p}_{data}(\tilde{y}))_+$$

in a non-parametric limit. Here, $(-)_+ =$ max$(\cdot,0)$, and Zx may correspond to a normalizing constant that makes $\sum_{\tilde{y}} g_x^*[\tilde{y}] = 1$.

Here, a classifier that has a sufficient capacity to express a function and is trained using the regularized loss function L may be assumed. In one example, when a distribution of a mixture dataset is $\hat{p}_{data}(\tilde{y}|x) = \pi' p_{mainfold}(\tilde{y}|x) + (1 - \pi')\varepsilon$ for a portion of $\pi' \in (0,1)$, and when labels of data are uniformly distributed as in $\hat{p}_{data}(\tilde{y}) = \varepsilon$, there may be $\lambda$ that makes a softmax output $g_x[\tilde{y}]$ approach $p_{maifold}(\tilde{y}|x)$ in the non-parametric limit.

According to the foregoing conclusion, the confidence regularizer may have an attribute of describing a manifold of a mixture dataset, and may thus be suitable for the model complexity penalizer in operation 575.

In addition, the EM process of the second model 130 may be described as follows.

The second model 130 may be executed in an EM period different from that for the first model 110. In the E-Step 530, the second model 130 may attempt to estimate a probability of an actual class of given data as expressed by Equation 11 below.

Equation 11:

$$q_i^t(y) = p^{t-1}(y|x_i,\tilde{y}_i) = \sum_{s_i=0}^1 p^{t-1}(s_i|x_i,\tilde{y}_i)p^{t-1}(y|x_i,\tilde{y}_i,s_i)$$

For example, when the hidden variable $s_i$ indicating a probability of a label of a corresponding data sample being an incorrect label $(x_i, \tilde{y}_i)$ is 1 (i.e., $s_i = 1$), the incorrect label $\tilde{y}_i$ may need to be an actual class, and thus $p(\cdot|x_i,\tilde{y}_i, s_i = 1) = e_{\tilde{y}i}$. In this example, $e_c$ denotes a one-hot vector with 1 in a cth item.

For example, when the hidden variable $s_i$ is 0 (i.e., $s_i = 0$), the second model 130 may discard an incorrect label included in a corrupted data sample and estimate an actual class based on an input $x_i$, and thus may model $p(\cdot|x_i,\tilde{y}_i,s_i = 0) = p(\cdot|x_i) = f_{xi}$. In this example, $f_{xi}$ may correspond to a softmax output of the second model 130.

In this case, on the side of the first model 110, a probability $(s_i = 1)$ of each data sample of a mixture dataset being a clean data sample may be calculated as expressed by Equation 5 above, for example. By reusing Equation 5, Equation 11 may be simplified into Equation 12 below.

Equation 12:

$$q_i^t(y) = q^{t-1}(s_i = 1)e_{\tilde{y}_i}[y] + q^{t-1}(s_i = 0)f_{x_i}^{t-1}[y]$$

The probability $q_i^t(y)$ estimated in the M-step 540 may assign a weight to each data sample when finding a parameter relating to a class y. Therefore, a maximization target of the second model 130 may be expressed by Equation 13 below.

Equation 13

$$\mathcal{L}^t_{aux} = \frac{1}{N}\sum_{i=1}^{N}\sum_{y=1}^{K} q^t_i(y)\log p_\phi(y,\tilde{y}_i|x_i)$$

By applying a chain rule to $p_\phi(y,\tilde{y}_i|x_i)$ in Equation 13, Equation 14 below may be obtained.

Equation 14:

$$\mathcal{L}^t_{aux} = \frac{1}{N}\sum_{i=1}^{N}\sum_{y=1}^{K} q^t_i(y)(\log p(y|x_i) + \log p(\tilde{y}_i|x_i,y))$$

$$= \frac{1}{N}\sum_{i=1}^{N}\sum_{y=1}^{K} q^t_i(y)(\log f_{x_i}[y] + \log T_{xi}[y,\tilde{y}_i])$$

In Equation 14, a model $T_{xi}[y,\tilde{y}_i] := p(\tilde{y}_i|x_i,y)$ may represent a label corruption probability, i.e., a probability that a correct label included in a dataset is corrupted to be an incorrect label. $T_{xi}$ may be assumed to be consistently maintained with respect to all input data $x_i$. In this case, two models f and T may not share parameters with each other. The model f may be implemented by the second model 130, and the model T may be implemented by a K x K matrix.

Therefore, a loss function $\mathcal{L}^t_{aux}$ of the second model 130 may be maximized separately for each of the models f and T. First, the loss function $\mathcal{L}^t_{aux}$ for the model f may be maximized. This may correspond to training the second model 130 having the loss $L^t_{aux,f}$, as expressed by Equation 15 below.

Equation 15:

$$L^t_{aux,f} = -\frac{1}{N}\sum_{i=1}^{N}\sum_{y=1}^{K} q^t_i(y)\log f_{x_i}[y]$$

$L^t_{aux,f}$ may correspond to cross-entropy having $q^t_i(y)$ as a training target. The training target $q^t_i(y)$ in Equation 12 may be connected to label estimation and label smoothing performed in semi-supervised learning.

Subsequently, for the model T, the loss function $\mathcal{L}^t_{aux}$ may be maximized.
The model T, which is a transition probability matrix, may correspond to a matrix indicating the label corruption probability. With the constraint that it needs to be valid as $\Sigma_{y'}T[y,y'] = 1, \forall y$ and $T[y,y'] \geq 0, \forall y,y'$, the maximization may be solved, and $T^t[y,y'] = \dfrac{\Sigma_{i:\tilde{y}_i=y'} q^t_i(y)}{\Sigma_i q^t_i(y)}$ may thereby be obtained.

As described above, the training method for automatic labeling may be performed through the EM process in each of the first model 110 and the second model 130.

For example, a distribution of incorrect labels may start with ε in the first model 110. As described above, by fixing ε as a constant (e.g., ε = 1/K), the transition probability matrix T may be discarded. However, the transition probability matrix T may be used, and thus ε may be modified in a subsequent iteration.

For example, when the transition probability matrix T is modified to establish the connection between T and ε, and the modified T is represented as Tc, the transition probability matrix based on a corrupted data sample may be obtained as expressed by Equation 16 below.

Equation 16:

$$T_c^t[y, y'] = \frac{\sum_{i: \tilde{y}_i = y'} q^{t-1}(s_i = 0) \; f_{x_i}^{t-1}[y]}{\sum_i q_i^{t-1}(s_i = 0) f_{x_i}^{t-1}[y]}$$

Subsequently, by definition, $\varepsilon_i$ may be calculated as expressed by Equation 17 below, and may be transferred to the first model 110 to be used instead of ε in Equation 5 described above.

Equation 17

$$\varepsilon_i^t = p^t(\tilde{y}_i | x_i, s_i = 0)$$

$$= \sum_{y=1}^{K} p^t(y | x_i, s_i = 0) p^t(\tilde{y}_i | x_i, y_i, s_i = 0)$$

$$= \sum_{y=1}^{K} f_{x_i}^t [y] T_c^t[y, \tilde{y}_i]$$

In summary, the training method for automatic labeling may use two neural networks of the first model 110 and the second model 130 whose functions are not symmetrical. The first model 110 may perform mixture modeling and classification of data samples including incorrect labels, and the second model 130 may perform resampling. Moreover, the second model 130 may naturally be a better model for inference because it operates as a teacher supervising the first model 110 which is simply regularized. The second model 130 may be executed on a different EM cycle to perform the resampling. The first model 110 and the second model 130 may interact with each other to handle incorrect labels.

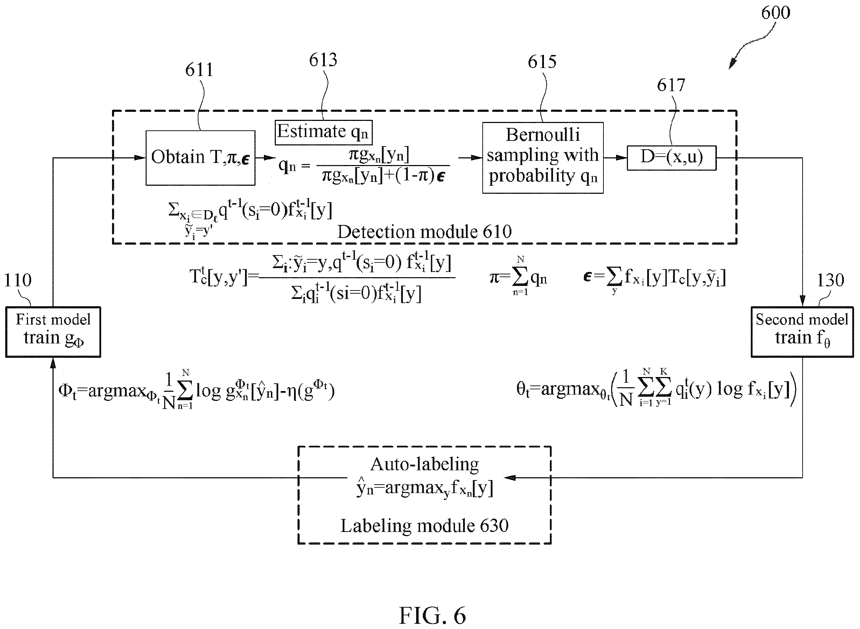

FIG. 6 illustrates an example numerical representation of an operation of a training device for automatic labeling according to one or more embodiments. Referring to FIG. 6, an example training device 600 may be configured to perform a process of classifying data samples including incorrect labels through a detection model 610 and a process of performing automatic labeling through a labeling model 630. The detection model 610 may detect an incorrect label using the first model 110 and the second model 130 described above. The labeling model 630 may automatically correct and relabel the incorrect label using the second model 130 described above. For example, each of the detection model 610 and the labeling model may include one or more neural networks.

In one example, when a data sample includes an incorrect label and is not completely trusted, the training device 600 may train the detection model 610 to detect the incorrect label and estimate a correct label corresponding to the incorrect label. The training device 600 may also train the labeling model 630 to automatically assign a new label to the incorrect label.

For example, a training dataset may include a set x of data and a set y of labels corresponding to the set x of data. Thus, the training dataset may be x × y as a mixture dataset in which a clean data sample with data labeled with a correct label and a corrupted data sample with data labeled with an incorrect label are mixed.

The clean data sample may be distributed over a manifold. This is because humans are aware of the manifold, and they may thus perform manual labeling. Therefore, the mixture dataset may be modeled by Equation 18 below, in a similar way to Equation 1 described above.

Equation 18:

$$p(y|x) \approx \pi p_{manifold}(y|x) + (1 - \pi)\epsilon$$

In Equation 18, $p_{manifold}(y|x)$ may correspond to a classifier model to be implemented through a neural network.

For example, $p(y|x) \approx \pi f_x^\theta[y] + (1 - \pi)\epsilon$, and may correspond to a softmax output of a neural network model. In addition, $\epsilon$ may correspond to a distribution of corrupted data samples.

A given data distribution $p_{data}(y|x)$ may be fitted into

$$p(x, y) \approx p_{data}(x)\big(\pi f_x^\theta[y] + (1 - \pi)\epsilon\big)$$

.

In one example, the first model 110 may ultimately attempt at a maximum likelihood estimation (or shortly an ML estimation) through the detection model 610. For the mixture dataset, it may be common to perform EM, with an indicator being as a hidden variable s, instead of performing a local gradient-based method. In this example, s = 0 may indicate that a corresponding data sample is a clean data sample, and s = 1 may indicate that the data sample is a corrupted data sample.

In addition, the EM algorithm may include an estimation process to determine the hidden variable s for each data sample, and thus group separation between a clean data sample and a corrupted data sample may be naturally performed.

Therefore, the maximum likelihood may be formulated in such a form as

$$\text{maximize}_{\theta_g, \pi} \, \mathbb{E}_{p_{data}(x, \tilde{y})} \big[\log p(x, \tilde{y})\big]$$ expressed in Equation 3 described above.

Moreover, the neural network may implement an arbitrary function, and thus a solution of the maximum likelihood may be $p(x, y) \to p_{data}(x, y)$. Accordingly, $\pi = 1$, $g_x = p_{data}(\cdot|x)$.

That the solution of the maximum likelihood becomes $p(x, y) \to p_{data}(x, y)$ may indicate overfitting to a corrupted data sample including an incorrect label, if there is no limit to model complexity.

In an early stage of model training, the model may be preferentially fitted to a majority of clean data samples. Therefore, as the training progresses, an appropriate penalizing term for model complexity may be required.

Therefore, by introducing the penalizing term (e.g., a regularizer) $\eta$ for model complexity at the maximum likelihood expressed in Equation 3, a final objective function such as

$$\text{maximize}_{\theta_g, \pi} \, \mathbb{E}_{(p_{data}(x, \tilde{y})} \big[\log p(x, \tilde{y})\big] - \eta(g)$$ expressed in Equation 4 above may be defined.

The training device may use a confidence regularizer, and the optimization problem may be iteratively solved through the EM algorithm.

Since the EM algorithm is a principled method that does not involve, for example, collapse or self-confirming bias, it may guarantee a stable operation even when a data sample includes an incorrect label corresponding to noise.

The detection model 610 may operate as follows.

In operation 611, the detection model 610 may obtain, from the labeling model 630 in a previous iteration process, a matrix T indicating a label corruption probability that a correct label included in a dataset is corrupted to be an incorrect label, a ratio $\pi$ of clean data samples included in the entire dataset, and a distribution $\epsilon$ of corrupted data samples.

The matrix T indicating the label corruption probability may be represented in such a form as

$$T_c^t[y, y'] = \frac{\sum_{i:\tilde{y}_i=y'} q^{t-1}(s_i=0) \, f_{x_i}^{t-1}[y]}{\sum_i q_i^{t-1}(s_i=0) f_{x_i}^{t-1}[y]}$$ described above.

In addition, the ratio $\pi$ of clean data samples included in the entire dataset may be represented as $$\pi = \sum_{n=1}^{N} q_n$$

$$\epsilon = \sum_{y} f_{x_i}[y] T_c[y, \tilde{y}_i]$$

, and the distribution $\epsilon$ of corrupted data samples may be represented as                            .

In operation 613, the detection model 610 may determine the hidden variable s for each data sample, and calculate a probability $q_n$ of each data sample being a clean data sample as expressed by Equation 19 below.

Equation 19

$$q_n = p(s_n = 1 | x_n, y_n) = \frac{\pi g_{x_n}^{\phi}[y_n]}{\pi g_{x_n}^{\phi}[y_n] + (1-\pi)\epsilon}$$

Operation 613 may correspond to the E-step 510 of the first model 110 described above with reference to FIG. 5.

In operation 615, the detection model 610 may sample a second data sample including a correct label based on the Bernoulli distribution with respect to the probability $q_n$.

In operation 617, the detection model 610 may classify the dataset into a first data sample u including an incorrect label and a second data sample x including a correct label by the sampling performed in operation 615. Operation 617 may correspond to the classification process 520 described above with reference to FIG. 5.

In one example, the labeling model 630 may optimize a parameter $\theta_t$ of the second model 130 using each of the classified data samples, as expressed by Equation 20 below.

Equation 20

$$\theta_t = argmax_{\theta_t} \left( \frac{1}{N} \sum_{i=1}^{N} \sum_{y=1}^{K} q_i^t(y) \log f_{x_i}[y] \right)$$

The optimization of the parameter $\theta_t$ of the second model 130 may ultimately correspond to training the neural network.

Subsequently, the labeling model 630 may perform resampling instead of reweighting for each data sample. The reweighting per data sample may ultimately correspond to removing a corrupted data sample. In one example, the reweighting per data sample may generate a distribution shift, compared to an ideal dataset in which the number of data samples is limited or in which all data samples are clean data samples, and thus the labeling model 630 may perform the resampling, instead of the reweighting, to maintain the number of data samples.

The labeling model 630 may perform relabeling on labels of given data, as expressed in $\hat{y}_n = argmax_y f_{x_n}[y]$, using the second model 130.

The first model 110 may update a parameter $\phi_t$ of the first model 110, using a data sample $(x_n, \hat{y}_n)$ obtained through the relabeling as training data $x_n$ passes through the labeling model 630.

The detection model 610 may optimize the parameter $\phi_t$ of the first model 110, as expressed by Equation 21 below, by weighting the probability $q_n$ for each data sample.

Equation 21

$$\phi_t = argmax_{\phi_t} \frac{1}{N} \sum_{n=1}^{N} \log g_{x_n}^{\phi_t}[\hat{y}_n] - \eta(g^{\phi_t})$$

The optimization of the parameter $\phi_t$ of the first model 110 may ultimately correspond to training the first model 110.

In one example, when using $\eta_0$ as the confidence regularizer, Equation 21 may be expressed by Equation 22 below.

Equation 22

$$\Phi_t = argmax_{\Phi_t} \frac{1}{N} \sum_{n=1}^{N} \log g_{x_n}^{\Phi_t}[\hat{y}_n] - \lambda_f \frac{1}{N^2} \sum_n \sum_m \log g_{x_n}^{\Phi_t}[\hat{y}_m]$$

When the first model 110 is trained by the parameter $\phi_t$ of the first model 110 updated through the foregoing process, the detection model 610 may predict a ratio of clean data samples including correct labels in the entire training dataset by the trained first model 110, as in operation 613 described above. The detection model 610 may detect a clean data sample and mark undetected data as a corrupted data sample.

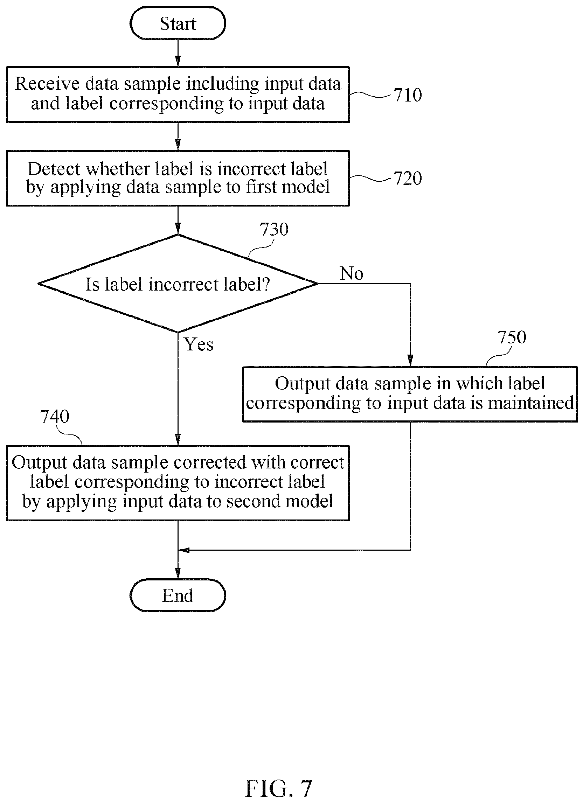

FIG. 7 illustrates an example method for automatic labeling according to one or more embodiments. Operations 710 through 750 to be described hereinafter with reference to FIG. 7 may be performed in sequential order, but need not be necessarily performed in sequential order. For example, the order of the operations may be changed and at least two of the operations may be performed in parallel, or any additional operation may be added in purpose to optimize the automatic labeling method.

Referring to FIG. 7, an automatic labeling device according to one or more embodiments may output a labeled data sample through operations 710 through 750.

In operation 710, the automatic labeling device may receive a data sample including input data and a label corresponding to the input data. The input data may include, for example, image data obtained by an image sensor, which may be configured to capture an image of a semiconductor, a road or a three-dimensional (3D) space, but examples of the image data are not necessarily limited thereto.

In operation 720, the automatic labeling device may detect whether the label is an incorrect label by applying the data sample received in operation 710 to a first model. In one example, the first model may include a first neural network trained to detect an incorrect label included in a data sample based on a confidence of a label.

In operation 730, the automatic labeling device may determine whether the label is an incorrect label.

In operation 740, as the label is determined to be the incorrect label in operation 730, the automatic labeling device may output a correct label corresponding to the incorrect label by applying the input data to a second model. The second model may include a second neural network trained to estimate a correct label corresponding to a data sample including an incorrect label. The automatic labeling device may include a display to display the generated data sample with the corrected label.

In contrast, if the label is determined not to be the incorrect label in operation 730, the automatic labeling device may output a data sample in which the label corresponding to the input data is maintained in operation 750. In this situation, the display may also display the generated data sample with the label being maintained.

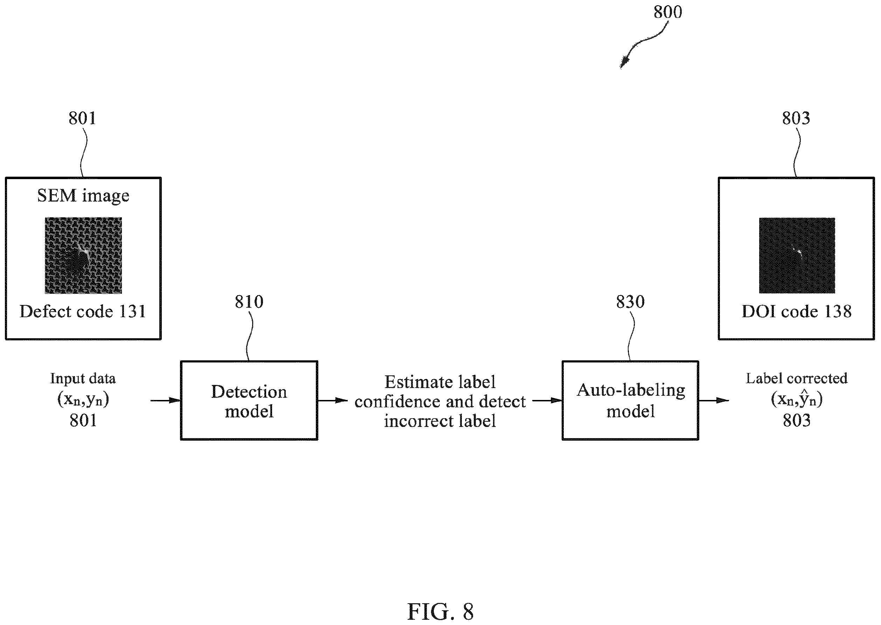

FIG. 8 illustrates an example operation of a semiconductor error detecting device using a trained detection model and a trained auto-labeling model according to one or more embodiments. Referring to FIG. 8, a semiconductor error detecting device 800 may include a trained detection model 810 and an auto-labeling model 830. For example, the detection model 810 may correspond to the first model 110 or the detection model 610 described above, and the auto-labeling model 830 may correspond to the second model 130 or the labeling model 630 described above. In an example, both of the detection model 810 and the auto-labeling model 830 may include one or more neural networks.

For example, when a data sample $(x_n, y_n)$ 801 is input to the detection model 810, the detection model 810 may estimate a confidence of a label $y_n$ included in the data sample $(x_n, y_n)$ 801 and detect whether the label $y_n$ is an incorrect label based on a result of the estimation. Here, input data $x_n$ of the data sample $(x_n, y_n)$ 801 may correspond to a scanning electron microscopy (SEM) image of a semiconductor and the label $y_n$ may correspond to an error code (e.g., "Defect code 131") corresponding to the SEM Image.

The detection model 810 may include a neural network that is trained to detect an incorrect label included in the data sample $(x_n, y_n)$ 801 based on the confidence of the label $y_n$. The confidence of the label $y_n$ may include a first probability of the label $y_n$ being correct and a second probability of the label $y_n$ being incorrect. When the second probability of the label $y_n$ being incorrect is higher than the first probability of label $y_n$ being correct, the detection model 810 may detect the label $y_n$ as an incorrect label.

If the label $y_n$ is detected as the incorrect label, the label $y_n$ corresponding to the incorrect label may be input to the auto-labeling model 830.

When the input data $x_n$ corresponding to the label $y_n$ detected as the incorrect label is input, the auto-labeling model 830 may estimate a correct label $\hat{y}_n$ corresponding to the incorrect label and output a data sample $(x_n, \hat{y}_n)$ 803 that is corrected and relabeled with an estimated correct label $\hat{y}_n$. The estimated correct label $\hat{y}_n$ included in the corrected data sample $(x_n, \hat{y}_n)$ 803 may be a correct label corresponding to the SEM image that is the input data $x_n$, for example,

"DOI code 138."

The auto-labeling model 830 may include a neural network that is trained to estimate the correct label $\hat{y}_n$ corresponding to the data sample $(x_n, y_n)$ 801 including the incorrect label $y_n$.

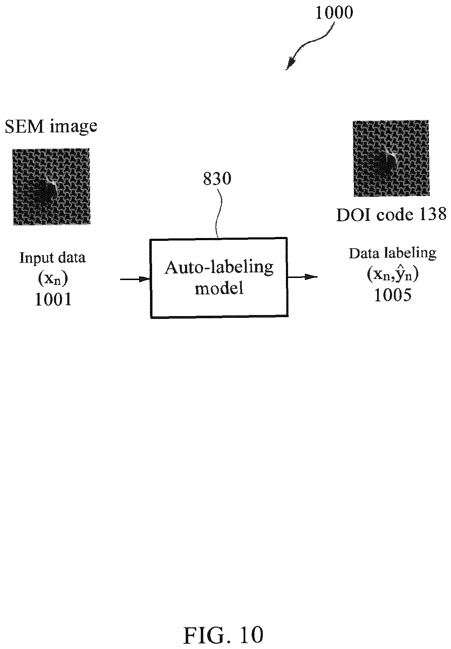

The auto-labeling model 830 may also be used as an input data classification model. The auto-labeling model 830 may automatically label unlabeled input data such that the data is used as a training data sample. A process of automatically labeling input data by the auto-labeling model 830 will be described below with reference to FIG. 10.

The semiconductor error detecting device 800 may detect and automatically correct an incorrect label corresponding to noise when constructing data used for training a semiconductor defect classification system during an error detecting or testing process for semiconductor equipment or facility. Semiconductor defect data may occur in various ways depending on, for example, equipment/facility replacement, engineer's experience, and product type, and thus the entire training dataset may include incorrect labels by around 20%.

The semiconductor error detecting device 800 may automatically detect and correct an incorrect label without using a method of continuously receiving feedback from a labeler and correcting and learning an incorrect label, thereby increasing efficiency in terms of cost and time.

Although an example of using a trained detection model and a trained auto-labeling model for semiconductor inspection has been described above, examples are not limited thereto. Examples also include using the trained detection model and the trained auto-labeling model in various fields of image processing and recognition (e.g., object detection, semantic segmentation, face recognition, video captioning, etc.).

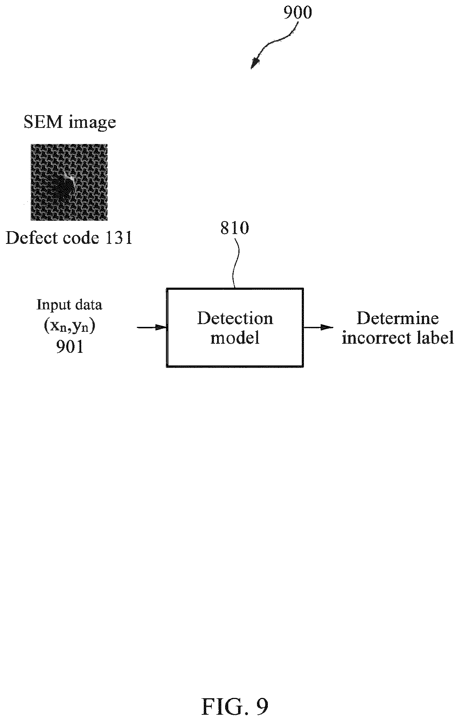

FIG. 9 illustrates an example operation of an incorrect label detecting device using a trained detection model according to one or more embodiments. Referring to FIG. 9, an incorrect label detecting device 900 may include a trained detection model 810 to detect an incorrect label. The detection model 810 may correspond to, for example, the first model 110 or the detection model 610 described above.

For example, when a data sample $(x_n, y_n)$ 901 is input to the detection model 810, the detection model 810 may estimate a confidence of a label $y_n$ included in the data sample $(x_n, y_n)$ 901 and detect whether the label $y_n$ is an incorrect label based on a result of the estimation. In this case, input data $x_n$ of the data sample $(x_n, y_n)$ 901 may correspond to an SEM image of a semiconductor, and the label $y_n$ may correspond to an error code (e.g., "Defect code 131") corresponding to the SEM image.

FIG. 10 illustrates an example operation of an automatic labeling device using a trained auto-labeling model according to one or more embodiments. Referring to FIG. 10, an automatic labeling device 1000 may include a trained auto-labeling model 830 to perform an automatic labeling operation. The auto-labeling model 830 may correspond to, for example, the second model 130 or the labeling model 630 described above.

When input data $x_n$ 1001 is input, the auto-labeling model 830 may estimate a correct label $\hat{y}_n$ corresponding to the input data $x_n$ 1001 and output a data sample $(x_n, \hat{y}_n)$ 1005 including the estimated correct label $\hat{y}_n$. Here, the estimated correct label $\hat{y}_n$ included in the data sample $(x_n, \hat{y}_n)$ 1005 may be a correct label corresponding to an SEM image of a semiconductor which is the input data $x_n$ 1001, for example, an error code (e.g., "DOI code 138").

The automatic labeling device 1000 may include an image sensor that captures the SEM image.

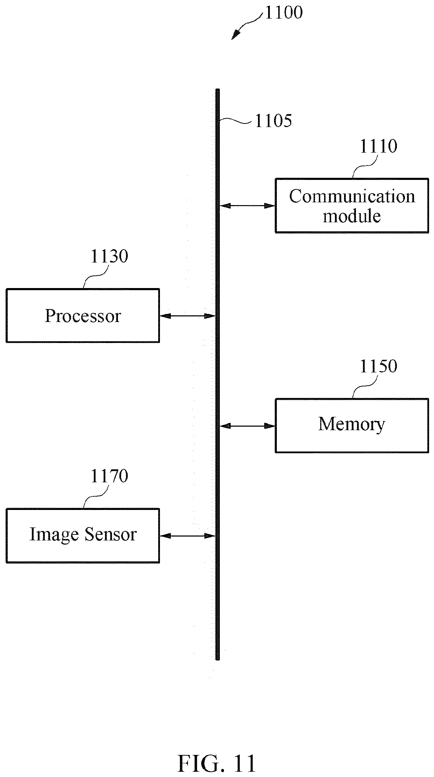

FIG. 11 illustrates an example training device for automatic labeling according to one or more embodiments. Referring to FIG. 11, a training device 1100 may include a communication system 1110, a processor 1130, a memory 1150, and an image sensor 1170. The communication system 1110, the processor 1130, the memory 1150, and the image sensor 1170 may be connected to one another via a communication bus 1105 or may be wirelessly connected to one another.

The communication system 1110 may receive a dataset for training, e.g., through a hardware interface, such as a wired or wireless transceiver or other receiving hardware interfaces. The training dataset may be data samples including input data and labels corresponding to the input data. The input data may include, for example, image data obtained by the image sensor 1170, which is configured to capture an image of a semiconductor, a road or a three-dimensional (3D) space, but examples of the image data are not necessarily limited thereto.

Based on confidence of labels included in the dataset, the processor 1130 may iteratively train a first model that detects an incorrect label included in the dataset and a second model that estimates a correct label of the labels. In one example, the processor 1130 may train the first model to predict the confidence, using a data sample in which the incorrect label is corrected. The processor 1130 may train the second model to estimate a correct label corresponding to a first data sample including the incorrect label classified based on the confidence. The processor 1130 may correct and relabel the incorrect label with the estimated correct label. The processor 1130 may generate the data sample in which the incorrect label is corrected, using at least one of the first model or the second model.

The processor 1130 may execute a program and control the training device 1100, and codes (or instructions) of the program to be executed by the processor 1130 may be stored in the memory 1150.

In addition, the processor 1130 may perform at least one of the methods described above with reference to FIGS. 1 through 6 or a scheme corresponding to the at least one method. The processor 1130 may be a hardware-implemented training device having a physically structured circuit to execute desired operations. The desired operations may include, for example, codes or instructions included in a program. The hardware-implemented training device 1100 may include, for example, a microprocessor, a central processing adaptive super-sampling device (e.g., a central processing unit (CPU)), a graphics processing adaptive super-sampling device (e.g., a graphics processing unit (GPU)), a processor core, a multi-core processor, a multiprocessor, an application-specific integrated circuit (ASIC), a field-programmable gate array (FPGA), and a neural processing unit (NPU).

The memory 1150 may store at least one program. The memory 1150 may store various pieces of information generated from processing by the processor 1130. The memory 1150 may store a dataset for training. The memory 1150 may store an incorrect label corrected with a correct label estimated by the processor 1130 and a data sample including the corrected incorrect label. The memory 1150 may also store the first model that detects an incorrect label included in the dataset and the second model that estimates a correct label of the labels. In addition, the memory 1150 may store various pieces of data and programs. The memory 1150 may include a volatile memory or a non-volatile memory. The memory 1150 may include a large-capacity storage medium such as a hard disk or the like to store various pieces of data.

As a non-limiting example, image sensor 1170 may be configured to capture the input images.

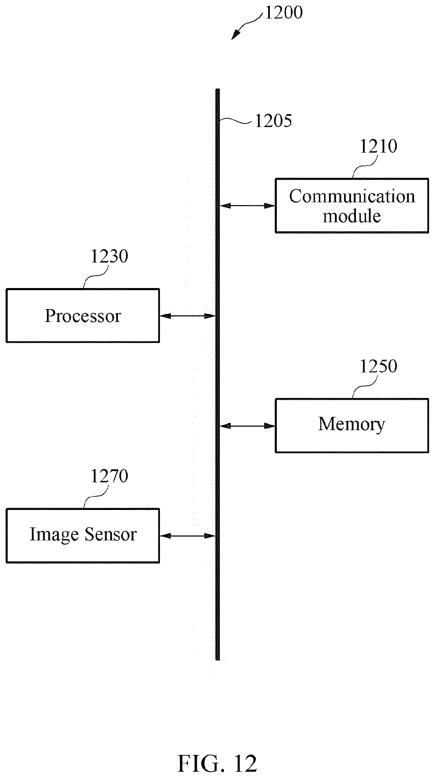

FIG. 12 illustrates an example automatic labeling device according to one or more embodiments. Referring to FIG. 12, an automatic labeling device 1200 may include a communication system 1210, a processor 1230, a memory 1250, and an image sensor 1270. The communication system 1210, the processor 1230, the memory 1250, and the image sensor 1270 may be connected to one another via a communication bus 1205 or may be wirelessly connected to one another.

The communication system 1210 may receive a data sample including input data and a label corresponding to the input data. The input data may include, for example, image data obtained by image sensor 1270, which is configured to capture an image of a semiconductor, a road or a three-dimensional (3D) space, but examples of the image data are not necessarily limited thereto.

The processor 1230 may detect whether the label is an incorrect label by applying the data sample to a first model. The first model may include a first neural network that is trained to detect an incorrect label included in a data sample based on a confidence of a label.

In addition, according to a determination that the label is an incorrect label, the processor 1230 may output a correct label corresponding to the incorrect label by applying the input data to a second model. The second model may include a second neural network that is trained to estimate a correct label corresponding to a data sample including an incorrect label.

The processor 1230 may execute a program and control the automatic labeling device 1200, and codes (instructions) of the program to be executed by the processor 1230 may be stored in the memory 1250.

In addition, the processor 1230 may perform at least one of the methods described above with reference to FIGS. 7 through 10 or a scheme corresponding to the at least one method. The processor 1230 may be a hardware-implemented automatic labeling device having a physically structured circuit to execute desired operations. The desired operations may include, for example, codes or instructions included in a program. The hardware-implemented automatic labeling device 1200 may include, for example, a microprocessor, a central processing adaptive device (e.g., CPU), a graphics processing adaptive device (e.g., GPU), a processor core, a multi-core processor, a multiprocessor, an ASIC, an FPGA, and an NPU.

The memory 1250 may store at least one program. The memory 1250 may store various pieces of information generated from processing by the processor 1230. The memory 1250 may store the first model and/or the second model. In addition, the memory 1250 may store various pieces of data and programs. The memory 1250 may include a volatile memory or a non-volatile memory. The memory 1250 may include a large-capacity storage medium such as a hard disk to store various pieces of data.

As a non-limiting example, image sensor 1270 may be configured to capture the input images.

The processors, memories, electronic devices, apparatuses, devices 100, 500, 600, 800, 900, 1000, 1100 and 1200, first and second model 110 and 130, detection and auto-labeling models 610, 630, 810, and 830, communication systems 1110, and 1210, processors 1130 and 1230, memories 1150 and 1250, and image sensors 1170 and 1270 described herein and disclosed herein described with respect to FIGS. 1-12 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1- 12 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the appended claims, i.e., all variations within the scope of the appended claims are to be construed as being included in the disclosure.

**Claims**

1.  A processor-implemented method, comprising:

    training a first model to predict confidences of labels for data samples in a training dataset, including using a corrected data sample obtained by correcting an incorrect label based on a corresponding confidence detected by the first model and an estimated corrected label generated by a second model;
    training the second model to estimate correct labels for the data samples, including estimating a correct other label corresponding to another incorrect label detected based on a corresponding confidence generated by the first model with respect to the other incorrect label; and
    automatically correcting the other incorrect label with an estimated correct other label.

2.  The method of claim 1, wherein the respective trainings of the first and second models are iterative trainings that, based on the confidences of the labels in the training dataset, iteratively trains the first model to detect incorrect labels and the second model to estimate the correct labels, and
    wherein the iterative training further comprises:

    determining the confidence comprising a first probability of each of the labels being correct and a second probability of each of the labels being incorrect;
    training the first model by updating first parameters of the first model, to predict confidence, using the corrected data samples obtained by correcting the incorrect labels in the first data sample.

3.  The method of claim 2, wherein the updating of the first parameters comprises updating the first parameters of the first model based on a maximum likelihood corresponding to the corrected data samples.

4.  The method of any of the claims 2 or 3, wherein the training of the first model comprises training the first model by applying respective regularization penalties for the confidences to the updated first parameters.

5.  The method of any of the previous claims, wherein the training of the first model further comprises determining initial parameter values of the first model based on a calculated cross-entropy loss.

6.  The method of any of the previous claims, wherein the training of the second model comprises:

    estimating a probability of the correct other label corresponding to the other incorrect label of the first data sample; and
    training the second model by updating second parameters of the second model, to estimate the other correct label, using a first data sample comprising the estimated probability of the other correct label.

7.  The method of any of the previous claims, the method further comprising classifying the data samples in the training dataset into a first data sample comprising the incorrect labels and a second data sample comprising the correct labels based on a distribution of the confidences,

    wherein the data samples are mixed such that the first data sample comprises training data and the incorrect label corresponding to the training data and the second data sample comprises the training data and the correct label corresponding to the training data,
    wherein the classifying preferably comprises sampling the second data sample comprising the correct labels based on a Bernoulli distribution.

8.  The method of claim 7, wherein the training data comprises image data of a semiconductor obtained by an image sensor.

9. The method of any of the previous claims, wherein the first model and the second model are each trained based on an expectation-maximization, 'EM', algorithm.

10. An automatic labeling method, comprising:

detecting whether a label for a data sample is an incorrect label by applying the data sample to a first model, wherein the first model comprises a first neural network that is trained, preferably using the method according to any of the previous claims, to detect the incorrect label comprised in the data sample based on confidence of the label.

11. The automatic labeling method of claim 10, wherein the data sample comprises input data and the label corresponding to the input data, and
wherein the method further comprises, when the label is determined as the incorrect label, generating a correct label corresponding to the incorrect label by applying the input data to a second model, wherein the second model comprises a second neural network that is trained, preferably using the method according to any of the claims 1-9, to estimate the correct label corresponding to the data sample comprising the incorrect label.

12. The automatic labeling method of claim 10 or 11, wherein the input data comprises image data of a semiconductor obtained by an image sensor.

13. A non-transitory computer-readable storage medium storing instructions that, when executed by a processor, cause the processor to perform the method according to any of the previous claims.

14. An electronic device, comprising a processor configured to perform the method of any of the claims 1-12.

15. The electronic device of claim 14, further comprising a communication system,
wherein the processor is further configured to:

based on confidences of labels for data samples in a training dataset received by the communication system, iteratively train the first model to detect incorrect labels in the training dataset and the second model to estimate correct labels corresponding to the incorrect labels; and
generate a data sample in which an incorrect label is corrected using at least one of the first model or the second model.

100

Incorrect label detection

110

First model

130

Second model

Automatic labeling

FIG. 1

```
                        ┌─────────┐
                        │  Start  │
                        └────┬────┘
                             │
  ┌──────────────────────────┼──────────────────────────┐
  │ Based on confidence of labels included in dataset for training,│
  │  iteratively train first model that detects incorrect label    │───210
  │      included in dataset and second model that                 │
  │          estimates correct label of labels                     │
  ├────────────────────────────────────────────────────────────────┤
  │     ┌────────────────────────────────────────────┐             │
  │  ┌─►│ Train first model to predict confidence using data │──211 │
  │  │  │   sample in which incorrect label is corrected     │      │
  │  │  └─────────────────────┬──────────────────────┘             │
  │  │                        │                                    │
  │  │  ┌─────────────────────▼──────────────────────┐             │
  │  │  │  Train second model to estimate correct label      │      │
  │  │  │  corresponding to first data sample including      │──213 │
  │  │  │  incorrect label classified based on confidence    │      │
  │  │  └─────────────────────┬──────────────────────┘             │
  │  │                        │                                    │
  │  │  ┌─────────────────────▼──────────────────────┐             │
  │  └──│ Correct incorrect label with estimated correct label │─215│
  │     └────────────────────────────────────────────┘             │
  └──────────────────────────┬──────────────────────────┘
                             │
  ┌──────────────────────────▼──────────────────────────┐
  │ Generate data sample in which incorrect label is corrected │──230
  │      using at least one of first model or second model     │
  └──────────────────────────┬──────────────────────────┘
                             │
                        ┌────▼────┐
                        │   End   │
                        └─────────┘
```

FIG. 2

211

```
                    ┌──────────┐
                    │  Start   │
                    └────┬─────┘
                         │
                         ▼
┌─────────────────────────────────────────────────┐
│  Determine confidence including first probability│
│  of each label being correct and second          │──310
│  probability of each label being incorrect       │
└─────────────────────┬───────────────────────────┘
                      │
                      ▼
┌─────────────────────────────────────────────────┐
│  Classify dataset into first data sample including│
│  incorrect label and second data sample including │──320
│  correct label based on confidence distribution   │
└─────────────────────┬───────────────────────────┘
                      │
                      ▼
┌─────────────────────────────────────────────────┐
│  Update first parameter of first model using data │
│  sample obtained by correcting incorrect label    │──330
│  in first data sample                             │
└─────────────────────┬───────────────────────────┘
                      │
                      ▼
┌─────────────────────────────────────────────────┐
│  Train first model to predict confidence          │──340
│  based on updated first parameter                 │
└─────────────────────┬───────────────────────────┘
                      │
                      ▼
                ┌──────────┐
                │   End    │
                └──────────┘
```

FIG. 3

213

```
        ( Start )
            │
            ▼
┌───────────────────────────────────────────────────┐
│  Estimate probability of correct label corresponding to  │── 410
│     incorrect label of first data sample                  │
└───────────────────────────────────────────────────┘
            │
            ▼
┌───────────────────────────────────────────────────┐
│  Update second parameter of second model using first data │── 420
│  sample including estimated probability of correct label  │
└───────────────────────────────────────────────────┘
            │
            ▼
┌───────────────────────────────────────────────────┐
│  Train second model to estimate correct label corresponding to │── 430
│  incorrect label based on updated second parameter         │
└───────────────────────────────────────────────────┘
            │
            ▼
        ( End )
```

FIG. 4

FIG. 5

EP 4 365 776 A1

FIG. 6

Start

Receive data sample including input data
and label corresponding to input data ⌐~710

Detect whether label is incorrect label
by applying data sample to first model ⌐~720

730

Is label incorrect label? — No

Yes

750

Output data sample in which label
corresponding to input data is maintained

740

Output data sample corrected with correct
label corresponding to incorrect label
by applying input data to second model

End

FIG. 7

EP 4 365 776 A1

800

801

803

| SEM image |
| |
| Defect code 131 |

| |
| |
| DOI code 138 |

Input data
$(x_n, y_n)$
801

810

| Detection model |

Estimate label
confidence and detect
incorrect label

830

| Auto-labeling model |

Label corrected
$(x_n, \hat{y}_n)$
803

FIG. 8

900

SEM image

Defect code 131

810

Input data
(x$_n$,y$_n$)
901 → | Detection model | → Determine incorrect label

FIG. 9

1000

SEM image

Input data
$(x_n)$
1001

830

Auto-labeling
model

DOI code 138

Data labeling
$(x_n, \hat{y}_n)$
1005

FIG. 10

1100

1105

1110

Communication
module

1130

Processor

1150

Memory

1170

Image Sensor

FIG. 11

1200

1205

1210

Communication
module

1230

Processor

1250

Memory

1270

Image Sensor

FIG. 12

Europäisches
Patentamt

European
Patent Office

Office européen
des brevets

# EUROPEAN SEARCH REPORT

Application Number

EP 23 20 7770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETIT OLIVIER ET AL: "Iterative confidence relabeling with deep ConvNets for organ segmentation with partial labels", COMPUTERIZED MEDICAL IMAGING AND GRAPHICS, PERGAMON PRESS, NEW YORK, NY, US, vol. 91, 15 May 2021 (2021-05-15), XP086715484, ISSN: 0895-6111, DOI: 10.1016/J.COMPMEDIMAG.2021.101938 [retrieved on 2021-05-15] * abstract * * sections 3.1.1, 3.2, 3.2.1, 3.2.2, 4 * ----- | 1-15 | INV. G06N3/088 G06N3/0895 ADD. G06N3/084 |
| X | LIU XIN ET AL: "Self-Error-Correcting Convolutional Neural Network for Learning with Noisy Labels", 2017 12TH IEEE INTERNATIONAL CONFERENCE ON AUTOMATIC FACE & GESTURE RECOGNITION (FG 2017), IEEE, 30 May 2017 (2017-05-30), pages 111-117, XP033109694, DOI: 10.1109/FG.2017.22 [retrieved on 2017-06-28] * abstract * * sections I, III * ----- | 1-15 | TECHNICAL FIELDS SEARCHED (IPC) G06N |

The present search report has been drawn up for all claims

| Place of search | Date of completion of the search | Examiner |
|---|---|---|
| The Hague | 23 February 2024 | Papadakis, Georgios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)